# EUROPEAN PATENT APPLICATION

(11) **EP 1 770 993 A1**
(43) Date of publication of application: **04.04.2007**
(21) Application number: 05021134.1
(22) Date of filing: 28.09.2005
(51) Int. Cl.: H04N 5/44, H04N 5/50

(54) **Selection of media channel**

(71) Applicant: Sony Ericsson Mobile Communications AB, 221 88 Lund (SE)
(72) Inventor: Tham, Krister, 225 94 Lund (SE)
(74) Representative: Dahnér, Christer

(57) **Abstract**

The present invention relates to an electronic device for receiving and selecting presentation data and control information of a plurality of media channels to be presented, which presentation data includes at least video data, audio data or a combination thereof, said electronic device (10) comprising:
a presentaion unit (11) provided for presenting a media channel,
a receiver (12) for receiving the presentation data and the control information,
a control unit (13) for controlling which media channel to be presented and arranged to receive user input for selecting a media channel, and
a user input unit (14) for receiving a media channel selection manipulation performed by the user and providing media channel selection information to the control unit (13) depending on user input, wherein the user input unit (14) is arranged to provide the control unit (12) with information about the media channel selection in response to a pre-selection manipulation performed by the user, whereby the control unit (13) stores the pre-selected channel in a background storage mode provided for a later change to the pre-selected channel in response to a channel selection manipulation later performed by the user. The invention is also related to a corresponding method.

## Description

### TECHNICAL FIELD

The present invention relates to an electronic device for receiving and selecting media channels, and a method for selection of received media channels for such an electronic device.

### BACKGROUND

Today's and future generation of handheld electronic devices, in particular mobile phones, provide an increasing amount of new features related to providing all types of media content, not just sound to a user thereof. In particular, video media features have been implemented, such as the possibility for a user to receive media such as TV broadcast for instance, i. e. to receive and display TV-programs (channels). Because of the ever increasing number of available programs (channels), the user has to be provided with a user-friendly way to select a desired TV program (channel).

There are different technologies to transmit media to an electronic device, for instance to transmit broadcasted media such as TV programs. One way is to use DVB-H, which is provided for broadcasting TV as well as other digital media to hand-held electronic devices such as mobile phones.

A problem with digital transmission, for instance with the DVB-H standard is the relatively long "zapping time", i. e. the time it takes to switch from one channel (program) to another. After the user has pressed a "zapping key", i.e. a channel selection key for a plurality of channels, or a channel number key, it could take a period of time for the new channel to appear on the display. Typically, when a user selects a new channel, the screen turns black presenting an infinite progress bar (there is nothing giving the user information about how long the loading time is or how loading progress) leaving the user to do nothing but wait for a period of time, or even more. Thus, selecting a new channel is often a very time consuming and frustrating from a user point of view, although this time delay will probably decrease as the technology make progress. It is still far from what a user is normally used to from analogue TV or radio, where a user can select a new channel instantly, and easily zap between channels.

Typically, in DVB-H, the channel switching (zapping) time consist of two main time delays since the video stream is sent out in bursts (time slots), which need to be preloaded/buffered when switching occurs. The first delay is the time until a new burst has been received and the second delay is the time for the audio video codec to be "reloaded", e. g. finding an I-frame.

A solution that is currently discussed is to listen to one or several channels in the background. This is technically possible, but requires much memory and power consumption is also high. It is also hard, or even impossible, to predict which will be the next user channel choice, i.e. which extra channels have to be received in the background.

Thus, there still exist some problems with conventional technology as regards channel selection, at least in a user-friendly way, i. e. fast channel selection without delays, such that rapid channel switching, so-called "zapping" could be provided.

Moreover, if a user switches from one application to another, such as switching from a movie to another, similar problems as described above might occur, which of course also give rise to problems of similar type.

### SUMMARY

The present invention is thus directed towards providing channel selection for an electronic device that can be provided in a user friendly manner, also as regards the experienced time it takes to change to a new channel.

One object of the present invention is to provide an electronic device for receiving presentation data and control information of a plurality of media channels to be displayed, which electronic device enables channel selection that is more user friendly.

This is achieved by detecting a future channel action selection by a user and changing the channel in dependence of these selections by means of pre-selecting a channel in advance of being later selected to save switching time.

With the above described invention, the user can pre-select a channel by means of using two-step sensitive channel selection keys, wherein the electronic device can predict the next user channel choice.

According to a first aspect of the present invention, this object is achieved by an electronic device for receiving presentation data and control information of a plurality of media channels to be presented, which presentation data includes at least video data, audio data or a combination thereof, said electronic device comprising:
a presentation unit provided for presenting a media channel,
a receiver for receiving the presentation data and the control information,
a control unit for controlling which media channel to be presented and arranged to receive user input for selecting a media channel, and
a user input unit for receiving a media channel selection manipulation performed by the user and providing media channel selection information to the control unit depending on user input, wherein the user input unit is arranged to provide the control unit with information about the media channel selection in response to a pre-selection manipulation for background receiving performed by the user, whereby the control unit stores the pre-selected channel in a background storage mode provided for a later change to the pre-selected channel in response to a channel selection manipulation later performed by the user.

A second aspect of the present invention is directed towards an electronic device including the features of the first aspect, wherein the user input unit is a zapping key provided for selecting one of a plurality of media channels.

A third aspect of the present invention is directed towards an electronic device including the features of the first aspect, wherein the user input unit is a numbered key of the keyboard.

A fourth aspect of the present invention is directed towards an electronic device including the features of the second or third aspect, wherein the media channel selection key is arranged to provide two different states in response to the manipulation performed by the user, a first state responsive to a touch, and a second state responsive to a press manipulation, wherein the first state corresponds to a pre-selection manipulation for background receiving and the second state to a selection manipulation performed by the user.

A fifth aspect of the present invention is directed towards an electronic device including the features of the previous aspects, wherein the channel selection key is provided in a remote control communicating with the electronic device.

A sixth aspect of the present invention is directed towards an electronic device including the features of the fifth aspect, wherein the entire remote control is arranged to be touch sensitive in response to the first state.

A seventh aspect of the present invention is directed towards an electronic device including the features of the fourth to the sixth aspect, wherein the first state is provided with a time hysteresis for turning off the background receiving.

The invention is also directed to a method for receiving presentation data and control information of a plurality of media channels for an electronic device, which presentation data includes at least video data, audio data or a combination thereof, said method comprising the steps of:
- receiving presentation data and control information,
- controlling which media channel to be displayed and receiving user input for selecting a media channel,
- selecting a first key mode depending on user input, in response to a pre-selection manipulation performed by the user,
- storing the pre-selected channel in a background storage mode provided for a later change to the pre-selected channel in response to a channel selection manipulation later performed by the user.

By means of the invention, instead of continuously storing a plurality of channels in the background in order to minimize the zapping, the electronic device will only store a next "predicted" channel, to which it is likely the user will switch.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

These and other objects, advantages and features of the invention will become apparent from the following description thereof taken in conjunction with the accompanying drawings, which illustrate a specific embodiment of the invention. In the drawings:
Fig. 1 is a front view of an electronic device for receiving and selecting media channels, herein illustrated as an embodiment of the present invention in the form of a portable communication device in the form of a mobile phone;
Fig. 2 is a block diagram showing the construction of the phone, for receiving and selecting media channels, herein illustrated as the same embodiment of the present invention in the form of the mobile phone as illustrated in Fig. 1;
Fig. 3 is a flowchart showing a method for receiving presentation data and control information of a plurality of-media channels provided for the above-mentioned portable communication device according to an embodiment of the present invention.

### DESCRIPTION OF EMBODIMENTS

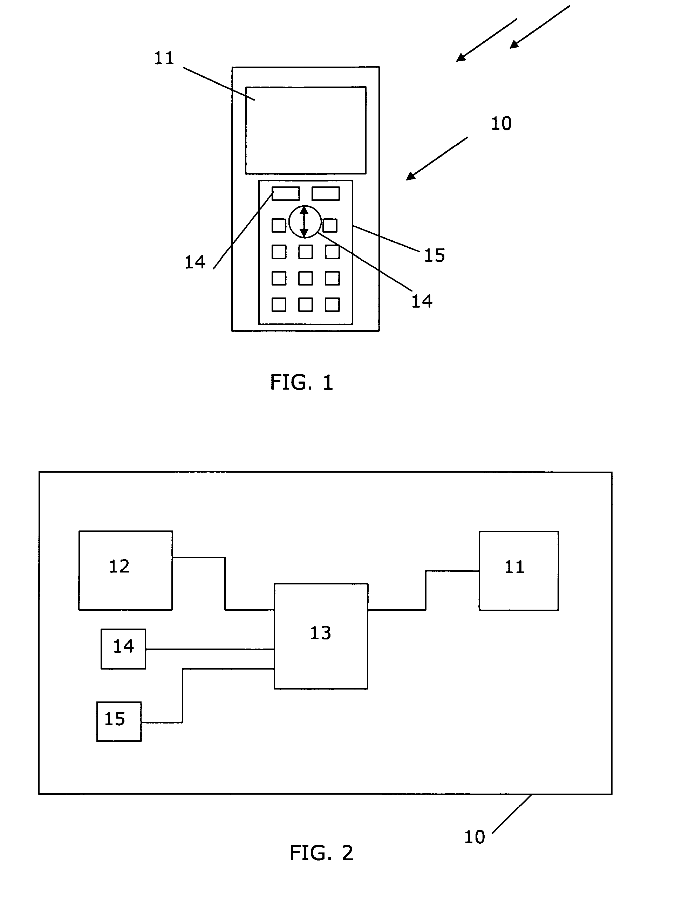

A preferred embodiment of an electronic device and thereto related method for receiving digital media of the present invention will be described with reference to the accompanying drawings, Fig. 1, 2 and 3. The invention will be described with reference to receiving broadcast programs. However, this is by no means intended to limit the invention to broadcasted media, but all media that can be presented is included, provided there is a problem regarding switching time (long switching time) when switching channels to be solved.

Since the invention is independent on the transmitter side and broadcast route (or other routes), of which typical examples of broadcast routes are via ground wave, satellite link etc, and the construction and implementation thereof are well known for a person skilled in the art, only the side related to the invention, i. e. the receiver side is shown and further explained hereinafter.

In the preferred embodiment, (se Fig. 1) the electronic device is a portable communication device in the form of a mobile phone 10 comprising an information presentation unit 11 in the form of a display provided for presenting (displaying) the received broadcasted media to a user, in this embodiment typically a viewer (not shown), a receiver 12 for receiving the broadcasted media including presentation data and the control information,
a control unit 13 for controlling which media, typically which media channel, to be displayed and arranged to receive viewer input information such as media channel selection, and a user input unit 14 for receiving a media channel selection manipulation performed by the user.

In the illustrated embodiment of Fig. 1, the control unit 13 is connected to both the display 11 and the receiver 12. The receiver 12 is connected to (or communicating with) the user input unit 14.

The user input unit 14 provides media channel selection information to the control unit 13 depending on viewer input, wherein the user input unit 14 is arranged to provide the control unit 13 with information about the media channel selection in response to a pre-selection manipulation performed by the user, whereby the control unit 12 stores the pre-selected channel in a background storage mode (not shown) provided for a later change to the pre-selected channel in response to a channel selection manipulation later performed by the user.

The mobile phone 10 also has an antenna for receiving broadcasted media. This is however not shown because it is provided in the interior of the phone (Fig. 1), and well known per se. The receiver 12 for receiving the broadcasted media is connected to the antenna in a conventional way, thus not shown. The receiver 12 is particularly provided for receiving digital media in the forma of digital TV channels, but without departing from the invention, the receiver 12 can be embodied as a receiver for any type of broadcast of other digital media content, typically sent via a broadcast route. Examples of other type of data than audio/video data (A/V data) are: interactive links, subtitle etc.

Typically, the digital receiver 12 (as well as the entire system, which is not shown) is operating according to well known standards such as DVB (Digital Video Broadcasting) or MPEG2 (Moving Picture Experts Group), herein in particular according to the DVB-H standard, in which each channel is sent out in bursts. Between these bursts the receiver 15 can switch to a so-called "low power sleep mode".' Typically, a burst is about 300 ms long and a sleep period is about 3 seconds. However, none of these standards will be described in more detail, since they are well known for a person skilled in the art. Hereinafter, it is assumed that DVB-H standard is referred to as an example, but without limiting the invention to this. In particular, the invention is for any type of broadcasting having any type of built-in time delay(s), for instance as explained in relation to DVB-H having sleeping mode to save power.

The user input unit 14, preferably embodied as a channel selection key, here in the form of a soft key provided at the display, which key 14 can be used for selecting different conventional items from a menu of the phone, but in the present invention it has one further function, which will be described in more detail below. Also, the conventional numbered keys of the keypad 15, having numbers ranging from 0-9 could alternatively be employed instead of the described soft-key 14, without departing from the invention. This will however not be described in more detail with reference to the drawing figures.

The invention, in particular the media channel (program) selection and user manipulation will now be described in more detail with reference to Fig. 1, 2 and 3 by means of an example.

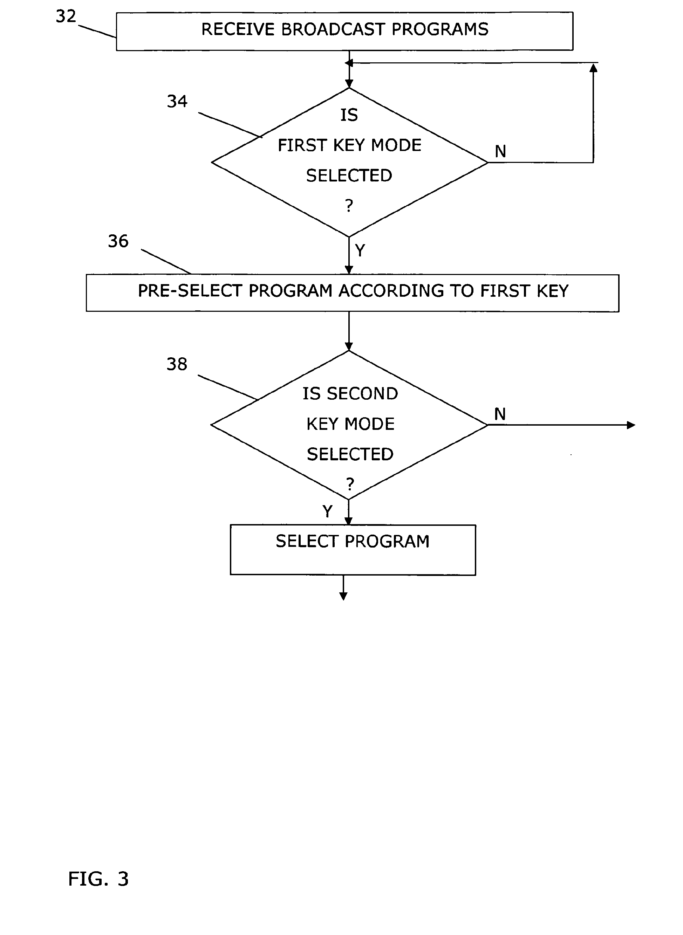

To begin, it is assumed that the mobile phone 10 receives a plurality of broadcast TV channels, of which one is already displayed on the display 11, (step 32, Fig. 3). This is not described in more detail, since it is well known how to receive and display a TV program in a mobile phone. The situation (embodiment) in which the user input unit 14 is the numbered keyboard 15 is described for simplicity, but without any intention to limit the invention to the use of a numbered key-board 15. It is also assumed that channel 1 corresponds to the input key (button) labelled "1", channel 2 to key "2" etc.

When a user (not shown) slightly puts his finger on (touches), select first key mode, step 34 Fig. 3, the button labelled "1" of the numbered keyboard while another channel is displayed, say channel "2", the new channel "1" is pre-selected, step 36, Fig. 3 (and stored in a pre-selection control information storage unit implemented as a RAM or the like in, or connected to, the control unit 13) despite the fact that the new channel "1" has not yet been selected, typically by the user finally selecting, typically pressing the button "1", step 38, Fig. 3.

By using the touch sensitive program keys, herein provided as "two step" touch sensitive keys, the mobile phone can predict the next user channel selection. As soon as a key is touched, but not pressed down, the store starts to store this channel in the background.

By touching a user input key 14, the user sets the phone in a "get ready to change channel mode", i. e. first key mode. When the user then finally presses the key to select the channel, the phone can quickly switch to the already pre-selected channel, i. e. select second key mode. Typically, storing the "new" channel in the background could include more than just one new channel. For instance, both next and previous channels could be stored.

The term "store" is not limited to storing in a memory only, but includes that the receiver starts to listen to one or more channels in the background. This is not further described, since it is known for a person skilled in the art to understand (and design) (See for instance background of invention).

According to an alternative embodiment of the invention, a remote channel selection device including user input unit(s) could be used for switching (selecting channels). Then, preferably, already when the remote channel selection device detects that the user holds the remote in his hand, the TV receiver starts to listen to one or more channels in the background. This embodiment of the invention has the particular advantage that it saves power because the receiver only has to listen to channels in the background when the user holds the remote in his hand.

Yet an alternative embodiment of the invention includes a time hysteresis for turning off the background receiving. This means that the background receiving will not turn off even if the user is not constantly touching a key (or the remote).

## Claims

1. Electronic device for receiving and selecting presentation data and control information of a plurality of broadcast programs to be presented, which presentation data includes at least video data, audio data or a combination thereof, said electronic device (10) comprising:
a presentation unit (11) provided for presenting a media channel,
a receiver (12) for receiving the presentation data and the control information,
a control unit (13) for controlling which media channel to be presented and
arranged to receive user input for selecting a media channel, and
a user input unit (14) for receiving a media channel selection manipulation performed by the user and providing media channel selection information to the control unit (13) depending on user input, wherein the user input unit is arranged to provide the control unit with information about the media channel selection in response to a pre-selection manipulation for background receiving performed by the user, whereby the control unit (13) stores the pre-selected channel in a background storage mode provided for a later change to the pre-selected channel in response to a channel selection manipulation later performed by the user.

2. Device according to claim 1, wherein the user input unit (14) is a zapping key provided for selecting one of a plurality of channels.

3. Device according to claim 1, wherein the user input unit (14) is a numbered key of the keyboard (15).

4. Device according to claim 2 or 3, wherein the channel selection key (14) is arranged to provide two different states in response to the manipulation performed by the user, a first state responsive to a touch, and a second state responsive to a press manipulation, wherein the first state corresponds to a pre-selection manipulation and the second state to a channel selection manipulation performed by the user.

5. Device according to any one of the claims 1-4, wherein the channel selection key is provided in a remote control communicating with the electronic device.

6. Device according to claim 5, wherein the entire remote control is arranged to be touch sensitive in response to the first state.

7. Device according to any one of the previous claims 4-6, wherein the first state is provided with a time hysteresis for turning off the background receiving.

8. Method for receiving presentation data and control information of a plurality of media channels for an electronic device, which presentation data includes at least video data, audio data or a combination thereof, said method comprising the steps of:
- receiving presentation data and control information, step 32,
- controlling which media channel to be presented and receiving user input for selecting a media channel, step 34
- selecting a first key mode depending on user input, in response to a pre-selection manipulation performed by the user, step 36
- storing the pre-selected channel in a background storage mode provided for a later change to the pre-selected channel in response to a channel selection manipulation later performed by the user, step 38.
